# EUROPÄISCHE PATENTSCHRIFT

(11) **EP 3 177 897 B1**
(45) Veröffentlichungstag und Bekanntmachung des Hinweises auf die Patenterteilung: **01.04.2020**
(21) Anmeldenummer: 15747437.0
(22) Anmeldetag: 31.07.2015
(51) Int. Cl.: G01F 1/58, G01F 7/00

(54) **MAGNETISCH-INDUKTIVES DURCHFLUSSMESSGERÄT MIT MEHREREN MESSELEKTRODENPAAREN UND UNTERSCHIEDLICHEN MESSROHRQUERSCHNITTEN**
MAGNETIC INDUCTIVE FLOW METER INCLUDING MULTIPLE PAIRS OF MEASUREMENT ELECTRODES AND DIFFERENT MEASUREMENT PIPE CROSS SECTIONS
DÉBITMÈTRE MAGNÉTIQUE INDUCTIF AVEC PLUSIEURS PAIRES D'ÉLECTRODES DE MESURE ET AVEC CONDUITES AUX SECTIONS TRANSVERSALES DIFFÉRENTES

(30) Priorität: 04.08.2014 DE 102014111047
(43) Veröffentlichungstag der Anmeldung: 14.06.2017
(73) Patentinhaber: Endress+Hauser Flowtec AG, 4153 Reinach (CH)
(72) Erfinder: KÜNG, Thomas, CH-4052 Basel (CH); BÄHR, Günther, CH-4106 Therwil (CH); VOIGT, Frank, 79576 Weil am Rhein (DE)
(74) Vertreter: Andres, Angelika Maria
(86) Internationale Anmeldenummer: PCT/EP2015/067638
(87) Internationale Veröffentlichungsnummer: WO 2016/020277

(56) Entgegenhaltungen:
- EP-A2- 2 192 390
- WO-A1-2014/082903
- DE-A1- 3 630 885
- DE-A1- 4 010 728
- DE-A1- 4 104 451
- DE-A1-102007 011 394
- DE-A1-102007 014 469
- US-A- 4 755 757
- US-B1- 6 463 807

## Beschreibung

Die Erfindung betrifft eine Vorrichtung und ein Verfahren zur Messung des Durchflusses eines strömenden Fluides durch ein Messrohr nach dem magnetisch-induktiven Messprinzip.

Magnetisch-induktive Durchflussmessgeräte finden vielfach Anwendung in der Prozess- und Automatisierungstechnik für Fluide ab einer elektrischen Leitfähigkeit von etwa 5µS/cm. Entsprechende Durchflussmessgeräte werden beispielsweise von der Anmelderin in unterschiedlichsten Ausführungsformen für verschiedene Anwendungsbereiche beispielsweise unter der Bezeichnung PROMAG vertrieben.

Das Messprinzip beruht auf dem Faraday'schen Gesetz der magnetischen Induktion und ist aus diversen Veröffentlichungen bekannt. Mittels eines an einem Messrohrteilabschnitt befestigten Magnetsystems wird im Wesentlichen senkrecht zur Strömungsrichtung des leitfähigen Fluides ein Magnetfeld zeitlich konstanter Stärke erzeugt. Dadurch werden die im strömenden Fluid vorhandenen Ionen in entgegengesetzte Richtungen abgelenkt. Die durch diese Ladungstrennung entstehende elektrische Spannung wird mittels mindestens eines ebenfalls im Messrohrteilabschnitt befestigten Messelektrodenpaares abgegriffen. Die abgegriffene Spannung ist proportional zur Strömungsgeschwindigkeit des Fluides und damit proportional zum Volumendurchfluss.

Die Messgenauigkeit eines magnetisch-induktiven Durchflussmessgeräts hängt dabei von vielen verschiedenen Faktoren ab. Manche davon betreffen die Konstruktion an sich, wie beispielsweise die Positioniergenauigkeit des Magnetsystems, oder die Auslesung des Messsignals über das mindestens eine Messelektrodenpaar sowie dessen Geometrie; andere sind durch die jeweilige Fließgeschwindigkeit des Fluides sowie durch dessen physikalische Eigenschaften vorgegeben.

Die Messelektroden sollten sich prinzipiell durch eine empfindliche und gleichzeitig störungsarme Messsignalerfassung auszeichnen. Üblicherweise setzt sich eine Messelektrode aus zwei Teilen zusammen: einem Elektrodenschaft, welcher zumindest fast vollständig in der Wandung des Messrohres eingebracht ist, und einem Elektrodenkopf zur direkten Kopplung mit dem Fluid und zur Erfassung des Messsignals. Die Geometrie des Elektrodenkopfs kann beispielsweise spitz oder pilzkopfförmig sein.

Bei der Anordnung des mindestens einen Messelektrodenpaares im Messrohrteilabschnitt sollten die Messelektroden sich im Messrohr gegenüber liegen und die Verbindungslinie der Elektrodensollte senkrecht zur Rohrachse und senkrecht zum Magnetfeld orientiert sein.

Neben diesen eher konstruktiven Aspekten spielen die elektrische Leitfähigkeit des Fluides, das im Messrohr vorherrschende Strömungsprofil sowie die Fließgeschwindigkeit des Fluides ein große Rolle für die Messgenauigkeit.

Aus dem Stand der Technik ist es bekannt geworden, mehr als ein Messelektrodenpaar zu verwenden, wie beispielsweise in der DE 10 2006 014 679 A1 offenbart. Die Gründe für solch einen Ansatz sind von Fall zu Fall unterschiedlich. Der Zweck liegt jedoch in allen Fällen in der Verbesserung der Messgenauigkeit. In der bisher unveröffentlichten Schrift mit dem Aktenzeichen 102013103211.7, eingereicht am 28.03.2013, wird ein magnetisch-induktives Durchflussmessgerät mit mehreren Messelektrodenpaaren beschrieben, bei welchem ein redundanter Abgriff der induzierten Spannung erfolgt. Durch diese Maßnahme wird der Störabstand - das Verhältnis des Anteils des Nutzsignals und des Störsignals am Messsignal - optimiert. In anderen Worten: die Messwertstreuung und Messabweichung werden reduziert.

Die DE 40 10 728 A1 offenbart ein magnetisch-induktives Durchflussmessgerät mit einer Selbstüberwachung bezüglich systembedingter Grenzwerte von Umpolphasen mit relativ niederfrequenter pulsierender Gleichfelderregung. Um Durchflussänderungen während solcher Umpolphasen erfassen zu können, weist das dort beschriebene Messgerät zwei Elektromagnetanordnungen mit je zwei Elektroden auf, wobei die jeweils erzeugten Magnetfelder rechtwinklig und phasenversetzt zueinander erzeugt werden. Auf diese Weise kann gewährleistet werden, dass stets ein von einer der beiden Elektromagnetanordnungen erzeugtes Magnetfeld eingeschwungen ist und zur Erfassung des Durchflusses herangezogen werden kann.

Die DE 41 04 451 A1 betrifft ein Regelüberlaufbauwerk mit einer Messeinrichtung zur Bestimmung der Überlaufwassermenge. Die Messeinrichtung umfasst zwei parallel zueinander angeordnete und unterschiedliche Durchmesser aufweisende Messrohre, an die jeweils ein magnetisch-induktives Durchflussmessgerät mit unterschiedlichen Messbereichen angebracht ist. Beide Messrohre sind über eine Kammer miteinander verbunden, in die das Zulaufwasser über einen Kanal zugeführt wird. In der Kammer ist eine Überlaufschwelle eingerichtet. Wird der Messbereich der ersten Messeinrichtung überschritten, tritt das Zulaufwasser über die Überlaufschwelle und fließt über das zweite Messrohr in einen Schacht ab. Eine Auswerteeinrichtung ist dazu eingerichtet, zur Bestimmung der Überlaufwassermenge die Messergebnisse beider Durchflussmessgeräte heranzuziehen.

Ein anderer Ansatz zur Erhöhung der Messgenauigkeit besteht darin, das Messrohr selbst gezielt zu modifizieren. In der EP2600119A1 ist beispielsweise eine Unterteilung des Messrohres in einen Einströmabschnitt, einen Messabschnitt und einen Ausströmabschnitt offenbart, wobei die drei Messrohrabschnitte jeweils unterschiedliche Querschnitte aufweisen. Insbesondere wird für den Messrohrabschnitt ein kleinerer Querschnitt, insbesondere mit einem rechteckigen Messrohrprofil, gewählt als für die anderen beiden Abschnitte. Die Querschnittsverringerung bietet dann den Vorteil, dass die Fließgeschwindigkeit des Fluides im Bereich des Messabschnitts vergrößert wird.

Bei geringen Fließgeschwindigkeiten ist das Messsignal nämlich sehr gering. Darüber hinaus können Nullpunktsinstabilitäten die Messung bei kleineren Fließgeschwindigkeiten stärker negativ beeinflussen. Bei einer größeren Fließgeschwindigkeit wird ein stärkeres Messsignal durch die Ladungstrennung aufgrund des Magnetfeldes erzielt und entsprechend auch die Messgenauigkeit erhöht.

Auf der anderen Seite führen sehr hohe Fließgeschwindigkeiten zum Auftreten von Kavitation, welche die Messgenauigkeit ebenfalls negativ beeinflusst, sodass es in Bezug auf die Messgenauigkeit von Vorteil ist, weder bei sehr großen noch bei sehr kleinen Fließgeschwindigkeiten zu messen.

In Bezug auf die Leitfähigkeit ist folgende Ergänzung zu erwähnen. Für Fluide mit geringer elektrischer Leitfähigkeit steigt an den Messelektroden mit zunehmender Fließgeschwindigkeit das Störrauschen an den Messelektroden signifikant stärker an, als das Nutzsignal. Deswegen ist es von Vorteil, bei Fluiden mit geringer elektrischer Leitfähigkeit hohe Fließgeschwindigkeiten zu vermeiden. Für das Beispiel von Wasser gilt dies beispielsweise für Leitfähigkeiten ≤20µS/cm.

Ein wichtiger Aspekt betrifft weiterhin das im Messrohr vorherrschende Strömungsprofil. Dieses ist abhängig von der Reynoldszahl, welche wiederum von der Fließgeschwindigkeit, der Geometrie des Messrohres und dessen Oberflächenrauhigkeit im Inneren Bereich, von physikalischen und/oder chemischen Materialparametern des Mediums, wie beispielsweise der Viskosität, und von den Einlaufbedingungen des strömenden Fluides im Messrohr vor dem Messrohrteilabschnitt, in welchem das Messgerät befestigt ist, abhängt. Bei gegebener Durchflussmenge bzw. bei gegebenem Volumendurchfluss bestimmt sich die Fließgeschwindigkeit des Fluides aus dem Querschnitt des Messrohres. Für sehr geringe Fließgeschwindigkeiten liegt bei einem ausreichend langen geraden Einlaufabschnitt des Messrohres, an welchen sich der Messrohrteilabschnitt anschließt, typischerweise ein laminares Strömungsprofil vor. Erhöht sich die Fließgeschwindigkeit bzw. die Reynoldszahl, gelangt man in einen Übergangsbereich, in welchem die Strömung anfällig wird für kleinste Störungen, bis ab einer bestimmten Fließgeschwindigkeit ein zunehmend turbulentes Strömungsprofil vorliegt.

Nun ist es so, dass bei Messungen, für welche die Reynoldszahl im Übergangsbereich zwischen typisch laminarer und turbulenter Strömung liegt, hohe Messabweichungen und Messwertstreuungen auftreten. Deshalb ist in diesem Falle die mögliche Messabweichung größer als im Falle eines laminaren oder turbulenten Strömungsprofils. Es ist also darüber hinaus von Vorteil bei der Messung des Durchflusses diesen Übergangsbereich zwischen laminarer und turbulenter Strömung zu vermeiden.

Zusammenfassend bestimmt die Fließgeschwindigkeit, welche vom Querschnitt des Messrohres abhängt, maßgeblich die Messgenauigkeit der magnetisch-induktiven Durchflussmessung.

Der vorliegenden Erfindung liegt somit die Aufgabe zugrunde, eine Vorrichtung und ein Verfahren zur Messung des Durchflusses nach dem magnetisch-induktiven Messprinzip bereitzustellen, wobei die Fließgeschwindigkeit des Fluides, anhand derer die Durchflussrate bestimmt wird, für jede Anwendung, soweit möglich, in einem optimalen Bereich für die Fließgeschwindigkeit liegt.

Diese Aufgabe wird erfindungsgemäß gelöst durch eine Vorrichtung ausgeführt zur Messung des Durchflusses eines strömenden Fluides durch ein Messrohr nach dem magnetisch-induktiven Messprinzip mit
(I) einem Messrohr mit zumindest zwei in Strömungsrichtung des Fluides aufeinanderfolgenden Teilabschnitten, wobei die Teilabschnitte sich im Durchmesser und/oder der Geometrie der Querschnittsfläche unterscheiden, derart dass bei einer gegebener Durchflussrate unterschiedliche Fließgeschwindigkeiten des strömenden Fluides in den mindestens zwei Teilabschnitten vorherrschen,
(II) zumindest einem Magnetsystem mit zumindest zwei Spulen zur Erzeugung eines Magnetfeldes im Wesentlichen senkrecht zur Strömungsrichtung des Fluides,
(III) mindestens zwei Messelektrodenpaaren zum Abgreifen der induzierten Spannung, wobei zumindest ein Messelektrodenpaar in einem ersten Teilabschnitt und ein zweites Messelektrodenpaar in einem zweiten Teilabschnitt angeordnet ist, wobei jedes Messelektrodenpaar eine erste und eine zweite Messelektrode umfasst, wobei die Messelektroden sich im Messrohr gegenüber liegen und die jeweilige Verbindungslinie der Messelektroden senkrecht zur Rohrachse und senkrecht zum Magnetfeld orientiert ist,
   und
(IV) einer Elektronikeinheit zur Signalerfassung, und/oder -auswertung und Speisung der Spulen, wobei die Elektronikeinheit so ausgestaltet ist, dass sie für jeden Teilabschnitt jeweils aus der induzierten Spannung die Fließgeschwindigkeit des Fluides und/oder die Durchflussrate bestimmt, dass sie für jeden Teilabschnitt einen Übergangsbereich zwischen laminarer und turbulenter Strömung bestimmt, dass sie für jeden Teilabschnitt prüft, ob der Übergangsbereich zwischen laminarer und turbulenter Strömung bei einer Messung vorliegt, dass sie zur Bestimmung des Durchflusses einen Teilabschnitt wählt, in welchem das vorherrschende Strömungsprofil im Wesentlichen außerhalb des jeweiligen Übergangsbereiches zwischen laminarer und turbulenter Strömung liegt.

Bei einer bestimmten Durchflussrate sind somit die Fließgeschwindigkeiten in den mindestens zwei Teilabschnitten des Messrohres unterschiedlich. Anschließend kann mittels verschiedener im Folgenden beschriebener Vorgehensweisen der Teilabschnitt gewählt werden, für welchen die Fließgeschwindigkeit im optimalen Bereich für die Fließgeschwindigkeit liegt.

Es ist dafür von Vorteil, wenn der Elektronikeinheit eine Speichereinheit zugeordnet ist, auf welcher Speichereinheit experimentell ermittelte oder anhand von mathematischen Modellen errechnete fluidspezifische und/oder messrohrspezifische Parameter und/oder Kennlinien hinterlegt sind, und dass die Elektronikeinheit so ausgestaltet ist, dass sie anhand der Parameter und/oder Kennlinien für jeden Teilabschnitt aus der Fließgeschwindigkeit des Fluides und dem Querschnitt des Teilabschnitts das gemäß einem angewendeten mathematischen Modell vorherrschende Strömungsprofil bestimmt.

In einer bevorzugten Ausgestaltung ist die Elektronikeinheit ferner so ausgestaltet, dass sie, soweit möglich, zur Bestimmung des Durchflusses den Teilabschnitt wählt, in welchem das vorherrschende Strömungsprofil außerhalb eines Übergangsbereiches zwischen laminarer und turbulenter Strömung liegt.

In einer weiteren Ausgestaltung ist die Elektronikeinheit so ausgestaltet, dass sie zur Bestimmung des Durchflusses die Fließgeschwindigkeiten für die verschiedenen Teilabschnitte mit je nach vorherrschendem Strömungsprofil geeigneten Gewichtungsfaktoren versieht und damit über die Fließgeschwindigkeiten in den Teilabschnitten mittelt. Dieses Vorgehen ermöglicht es, die beiden für unterschiedliche Fließgeschwindigkeiten bestimmte Werte für den Durchfluss zu vergleichen, und Ungenauigkeiten aufgrund einer gegebenenfalls zu hohen oder zu niedrigen Fließgeschwindigkeit auszugleichen.

In Bezug auf den oben bereits beschriebenen Einfluss der elektrischen Leitfähigkeit des Fluides ist es von Vorteil, wenn ein Sensorelement zur Erfassung der elektrischen Leitfähigkeit des Fluides vorgesehen ist. Die Elektronikeinheit sollte dann so ausgestaltet sein, dass bei Fluiden mit einer Zusammensetzung, bei der das Signalrauschen in dem für die Messung relevanten Durchflussbereich mit zunehmender Fließgeschwindigkeit stärker zunimmt als das Messsignal, insbesondere bei Fluiden mit einer geringen elektrischen Leitfähigkeit, zur Messung des Durchflusses das Messelektrodenpaar verwendet wird, welches in dem Teilabschnitt mit dem größten Querschnitt angeordnet ist.

Es ist ferner von Vorteil, wenn die Messelektroden unterschiedliche Geometrien aufweisen, insbesondere eine spitze, stiftförmige, zylindrische, konische oder pilzköpfige Geometrie. Die unterschiedlichen Geometrien beeinflussen das strömende Fluid auf unterschiedliche Weise, da sie unterschiedlich weit in den jeweiligen Teilabschnitt des Messrohres hineinragen. Entsprechend wird das vorherrschende Strömungsprofil je nach der gewählten Geometrie der Messelektrode unterschiedlich beeinflusst. Weiterhin erlaubt die Wahl einer spitzen Geometrie im Teilabschnitt mit dem größeren Durchmesser die Verhinderung von Ablagerungen bei entsprechenden Medien aufgrund der in diesem Teilabschnitt herrschenden niedrigeren Fließgeschwindigkeiten.

In einer bevorzugten Ausführung sind an mindestens einem Teilabschnitt mindestens zwei Messelektrodenpaare angebracht. Neben der Messung an Teilabschnitten mit verschiedenen Querschnitten erlaubt diese Ausführung einen redundanten und damit genaueren Abgriff des Messsignals.

In einer weiteren bevorzugten Ausgestaltung ist das Magnetsystem so konstruiert, dass es sich entlang aller Teilabschnitte erstreckt. Alternativ kann für jeden Teilabschnitt ein separates Magnetsystem vorgesehen sein.

Die erfindungsgemäße Aufgabe wird ferner gelöst durch ein Verfahren zur Messung eines strömenden Fluides durch ein Messrohr nach dem magnetisch induktiven Messprinzip mit
(I) einem Messrohr, welches aus zumindest zwei in Strömungsrichtung des Fluides aufeinanderfolgenden Teilabschnitten zusammengesetzt wird, wobei die Teilabschnitte sich im Durchmesser und/oder der Geometrie der Querschnittsfläche unterscheiden, derart dass bei gegebener Durchflussrate unterschiedliche Fließgeschwindigkeiten des strömenden Fluides in den mindestens zwei Teilabschnitten vorherrschen,
(II) wobei ein Magnetfeld im Wesentlichen senkrecht zur Strömungsrichtung des Fluides erzeugt wird, welches das Messrohr durchsetzt,
(III) wobei die induzierte Spannung in jedem Teilabschnitt abgegriffen wird, und
(IV) wobei für jeden Teilabschnitt jeweils aus der induzierten Spannung die Fließgeschwindigkeit des Fluides und/oder die Durchflussrate bestimmt wird, wobei für jeden Teilabschnitt ein Übergangsbereich zwischen laminarer und turbulenter Strömung bestimmt wird,
   wobei für jeden Teilabschnitt geprüft wird, ob der Übergangsbereich zwischen laminarer und turbulenter Strömung bei einer Messung vorliegt, wobei zur Bestimmung des Durchflusses ein Teilabschnitt gewählt wird, in welchem das vorherrschende Strömungsprofil im Wesentlichen außerhalb des jeweiligen Übergangsbereiches zwischen laminarer und turbulenter Strömung liegt.

Dabei ist es von Vorteil, wenn anhand auf einer Speichereinheit hinterlegter experimentell ermittelter oder anhand von mathematischen Modellen errechneter fluidspezifischer und/oder messrohrspezifischer Parameter und/oder Kennlinien für jeden Teilabschnitt aus der Fließgeschwindigkeit des Fluides und dem Querschnitt des Teilabschnitts das gemäß einem angewendeten mathematischen Modell vorherrschende Strömungsprofil bestimmt wird.

Ebenso ist es vorteilhaft, wenn zur Bestimmung des Durchflusses, soweit möglich, einerseits der Teilabschnitt gewählt wird, in welchem das vorherrschende Strömungsprofil außerhalb eines Übergangsbereiches zwischen laminarer und turbulenter Strömung liegt und andererseits keine extrem geringe oder große Fließgeschwindigkeit auftritt.

In einer bevorzugten Ausgestaltung werden zur Bestimmung des Durchflusses die Fließgeschwindigkeiten für die verschiedenen Teilabschnitte mit je nach vorherrschendem Strömungsprofil geeigneten Gewichtungsfaktoren versehen. Anschließend wird damit über die Fließgeschwindigkeiten der verschiedenen Teilabschnitte gemittelt.

In einer besonders bevorzugten Ausgestaltung wird bei geringen Durchflussraten das Messelektrodenpaar verwendet, welches im Teilabschnitt mit dem kleinsten Querschnitt angeordnet ist. In diesem Teilabschnitt herrscht jeweils die höchste Fließgeschwindigkeit. Entsprechend wird die Messgenauigkeit erhöht. Im Falle von Wasser betrifft dies beispielsweise Fließgeschwindigkeiten ≤10cm/s in den Teilabschnitten mit größerem Durchmesser.

Auf ähnliche Weise ist es von Vorteil, wenn bei hohen Durchflussraten das Messelektrodenpaar verwendet wird, welches im Teilabschnitt mit dem größten Querschnitt angeordnet ist. Dort ist in diesem Falle die Fließgeschwindigkeit am geringsten, so dass das Auftreten von Kavitation vermieden werden kann, wie sie im Falle von Wasser bei Fließgeschwindigkeiten ≥12m/s auftreten kann. Bei diesen Fließgeschwindigkeiten in den Teilabschnitten mit kleinerem Durchmesser kann der Teilabschnitt mit größerem Durchmesser verwendet werden. Damit die eventuell bei Kavitation auftretenden Gasblasen im Teilabschnitt mit größerem Durchmesser nicht zu Störungen führen, ist die Anordnung der Teilabschnitte im Messrohr bezogen auf die Durchflussrichtung bevorzugt von Teilabschnitten mit größerem Durchmesser zu solchen mit kleinerem Durchmesser vorzunehmen.

Die Erfindung wird im Folgenden anhand der Figuren Fig. 1 bis Fig.4 beschrieben. Es zeigt:
Fig. 1 ein magnetisch-induktives Durchflussmessgerät gemäß dem Stand der Technik
Fig. 2 ein erfindungsgemäßes Messrohr mit zwei Teilabschnitten mit unterschiedlichen Querschnitten
Fig.3 eine schematische Grafik zur Illustration der Abhängigkeit der Messwertabweichung vom vorherrschenden Strömungsprofil
Fig. 4 ein Blockdiagramm eines erfindungsgemäßen Verfahrens zur Ermittlung des Durchflusses gemäß der Anordnung aus Fig. 2.

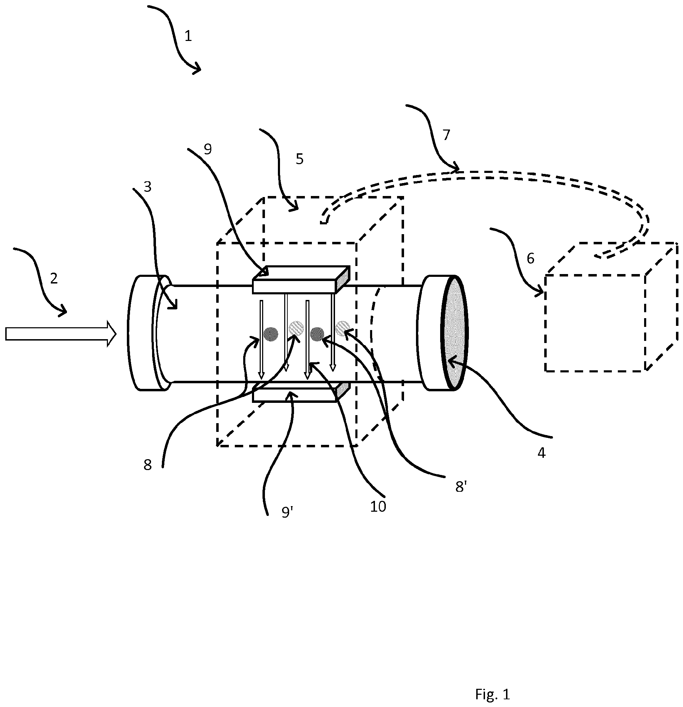

In Fig. 1 ist ein magnetisch-induktives Durchflussmessgerät 1 zur Messung des Durchflusses eines strömenden Fluides 2 durch ein Messrohr 3 gezeigt. Das Messrohr ist im dem Fluid zugewandten Bereich, d. h. an der Innenseite über die ganze Länge, mit einem elektrisch isolierenden Liner 4 versehen. Dargestellt sind zwei Messelektrodenpaare 8,8' zum Abgreifen der induzierten Spannung sowie das Magnetsystem 9, 9', welches der Einfachheit halber durch zwei Quader dargestellt ist. Es umfasst zumindest zwei Spulen zur Erzeugung des Magnetfeldes 10 und in einer möglichen Ausgestaltung der Erfindung auch Polschuhe zur Realisierung einer vorteilhaften räumlichen Verteilung. Die jeweiligen Verbindungsachsen der Messelektrodenpaare 8, 8' sind jeweils senkrecht zu der Verbindungsachse der Feldspulen 9, 9' auf gegenüberliegenden Seiten des Messrohres positioniert.

Die Sensoreinheit mit ihren jeweiligen Komponenten wie z. B, den Messelektrodenpaaren 8, 8' und dem Magnetsystem 9, 9' ist üblicherweise zumindest teilweise von einem Gehäuse 5 umgeben. Im Gehäuse 5 oder im vorliegenden Falle außerhalb des Gehäuses 5 ist weiterhin eine Elektronikeinheit 6 vorgesehen welche über ein Verbindungskabel 7 mit dem Feldgerät elektrisch verbunden ist. Die Elektronikeinheit dient der Signalerfassung und/oder-auswertung und der Speisung der Spulen, sowie als Schnittstelle zur Umgebung, z. B. der Messwertausgabe oder Einstellung des Geräts.

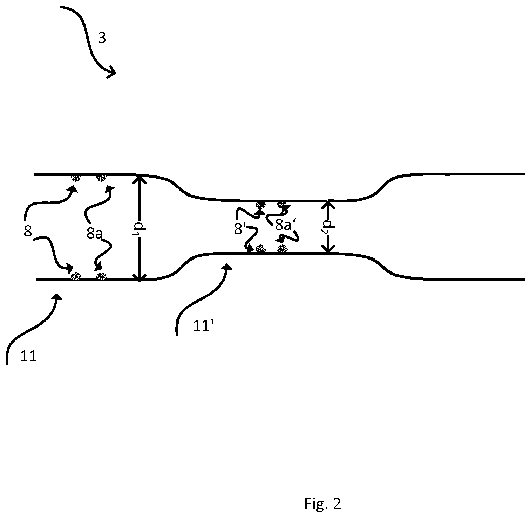

In Fig. 2 ist beispielhaft ein erfindungsgemäßes Messrohr 3 mit zwei Teilabschnitten, einem ersten Teilabschnitt 11 mit einem großen Querschnitt d₁ und einem zweiten Teilabschnitt 11' mit einem kleinen Querschnitt d₂. Eine bevorzugte Kombination wäre gegeben mit einer Nennweite von DN15 für den ersten Teilabschnitt 11 und DN8 für den zweiten Teilabschnitt 11'. Im ersten Teilabschnitt 11 befindet sich ein erstes Messelektrodenpaar 8, und im zweiten Teilabschnitt 11' ein zweites Messelektrodenpaar 8'. Es versteht sich von selbst, dass diese Ausführung nur ein Beispiel darstellt. Selbstverständlich können andere Größenverhältnisse für die verschiedenen Teilabschnitte 11,11' gewählt werden, es können mehr als zwei Teilabschnitte 11,11' verwendet werden, oder es kann pro Teilabschnitt 11,11' mindestens ein weiteres Messelektrodenpaar 8a,8a' befestigt sein.

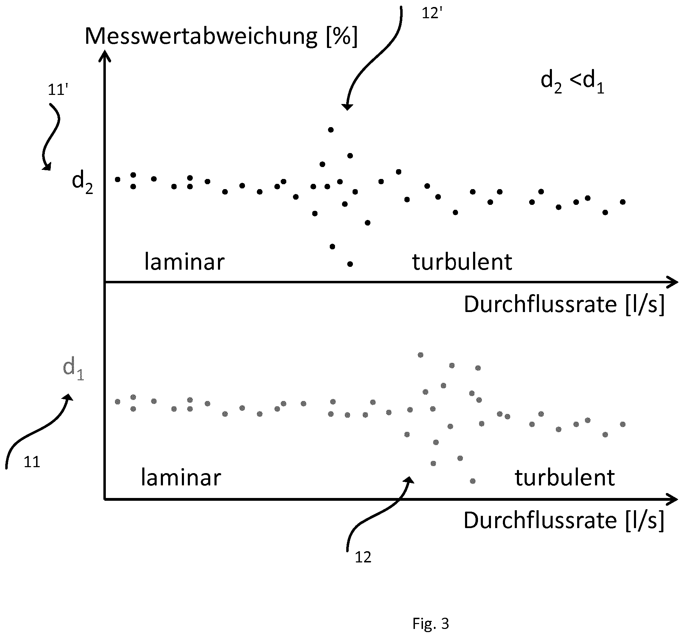

Fig. 3 zeigt eine schematische Grafik mit zwei Diagrammen zur Abhängigkeit der Messwertabweichung vom vorherrschenden Strömungsprofil bzw. von der Durchflussrate beispielhaft für eine Newtonsche Flüssigkeit für die beiden Teilabschnitte 11,11' mit den beiden Querschnitten d₁ und d₂, wobei d₁>d₂, wie in Fig. 2 dargestellt. Für geringe lokale Fließgeschwindigkeiten v liegt eher ein laminares Strömungsprofil vor und für hohe Fließgeschwindigkeiten eher ein turbulentes Strömungsprofil. Zwischen diesen beiden Strömungsprofilen findet sich jeweils ein Übergangsbereich 12,12'. Da bei gegebener Durchflussrate die Fließgeschwindigkeiten und insbesondere Reynoldszahlen in den beiden Teilabschnitten 11,11' jedoch nicht gleich sind, liegt der Übergangsbereich 12,12' für die beiden Teilabschnitte 11,11' bei unterschiedlichen Durchflussraten. Die Fließgeschwindigkeit im ersten Teilabschnitt 11 mit dem größeren Querschnitt d₁ ist im Verhältnis d₂²/d₁²langsamer als diejenige im zweiten Teilabschnitt 11' mit dem geringeren Querschnitt d₂. Entsprechend treten im ersten Teilabschnitt 11 erst bei höheren Durchflussraten Turbulenzen auf, da bei im Vergleich zu Teilabschnitt 11' höheren Durchflussraten die kritische Reynoldszahl überschritten wird. Als Konsequenz liegt der Übergangsbereich 12 für den ersten Teilabschnitt 11 bei höheren Durchflussraten als der Übergangsbereich 12' für den zweiten Teilabschnitt 11'. Die Betrachtungen hier beziehen sich der Einfachheit der Argumentation halber primär auf die Fließgeschwindigkeit. Eigentlich ist für das Strömungsprofil das Produkt aus Durchflussgeschwindigkeit und Durchmesser entscheidend. Da aber die Durchflussgeschwindigkeit bei gegebener Durchflussrate wie oben ausgeführt umgekehrt proportional zum Quadrat des Durchmessers ist, sind die beiden Größen nicht unabhängig voneinander und insbesondere überwiegt die Änderung der Geschwindigkeit die Änderung des Durchmessers bezüglich der Auswirkung auf die Reynoldszahl.

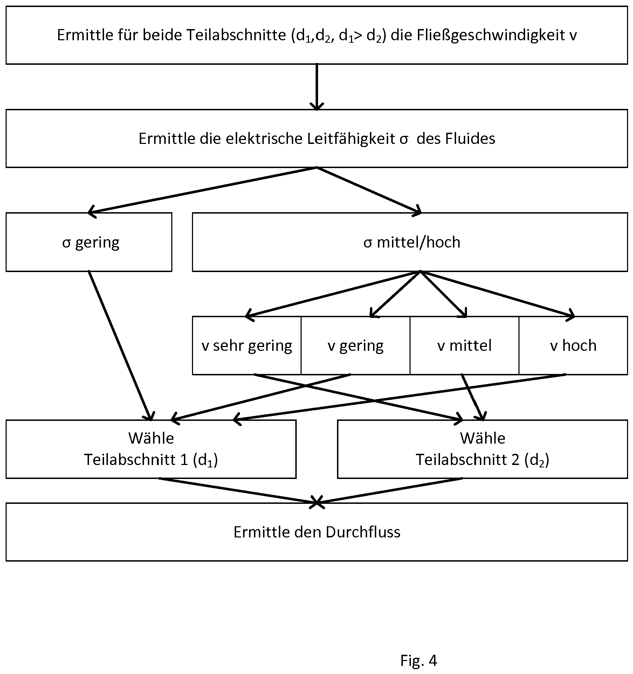

Fig. 4 zeigt ein Blockdiagramm eines erfindungsgemäßen Verfahrens. Wieder ist der Ausgangspunkt die in Fig.2 gezeigt Anordnung mit zwei Teilabschnitten 11,11' und zwei Messelektrodenpaaren 8, 8'. Für das hier gezeigte Beispiel wird angenommen, dass die in Fig. 3 gezeigten Übergangsbereiche 12,12' für die beiden Teilabschnitte 11,11' nicht überlappen, also in verschiedenen Intervallen für die Durchflussrate liegen. Damit entfällt die zuvor beschriebene Gewichtung der einzelnen Messwerte für die Bestimmung der Durchflussgeschwindigkeit. Es versteht sich jedoch von selbst, dass solch ein Verfahrensschritt unter anderen Umständen noch berücksichtigt werden müsste. Der Einfachheit halber wurde in diesem vereinfachten Beispiel ferner die Ermittlung des vorherrschenden Strömungsprofils nicht eingezeichnet.

Erfindungsgemäß wird für beide Teilabschnitte 11,11' in einem ersten Schritt die Fließgeschwindigkeit bestimmt. Anhand von auf der Speichereinheit hinterlegten experimentell ermittelten oder anhand von mathematischen Modellen errechneten fluidspezifischen Parametern und/oder Kennlinien kann dann wiederum aus der Fließgeschwindigkeit auf das vorherrschende Strömungsprofil geschlossen werden. In einem zweiten Schritt wird in dem vorliegenden Beispiel die Leitfähigkeit des Fluides bestimmt. Dieses Vorgehen ist erfindungsgemäß nicht zwangsläufig notwendig, erhöht jedoch unter bestimmten Umständen die Messgenauigkeit, insbesondere für Fluide mit geringer elektrischer Leitfähigkeit. Ist die Leitfähigkeit nämlich gering, wird der erste Teilabschnitt 11 mit dem größeren Querschnitt d₁ gewählt, da in diesem Fall mit zunehmender Fließgeschwindigkeit das geschwindigkeitsabhängige Signalrauschen stärker zunimmt als das Messsignal.

Für mittlere und hohe elektrische Leitfähigkeiten bestimmt sich die Wahl des Teilabschnittes 11, 11' nur noch über das vorherrschende Strömungsprofil. Ist die gegebene Durchflussrate so, dass im ersten Teilabschnitt 11 (d₁>d₂) nur eine sehr geringe Fließgeschwindigkeit vorherrscht, wird der zweite Teilabschnitt 12a mit dem geringeren Durchmesser d₂ gewählt. In diesem Fall ist dort die Fließgeschwindigkeit am höchsten, aber noch im laminaren Bereich. Entsprechend wird die Messgenauigkeit erhöht. Für geringe, jedoch etwas höhere Durchflussraten beginnt im zweiten Teilabschnitt 11' (d₂) bereits der Übergangsbereich 12a, weshalb der erste Teilabschnitt 11 mit dem größeren Querschnitt d₁ gewählt ist, für welchen das Strömungsprofil noch laminar ist.

Für mittlere Durchflussraten kehrt die Situation sich um. Im ersten Teilabschnitt 11 (d₁) beginnt der Übergangsbereich 12, während im zweiten Teilabschnitt 11a mit dem geringeren Querschnitt d₂ bereits eine turbulente Strömung vorliegt. Entsprechend wird der zweite Teilabschnitt 11' gewählt, da nun für diesen das Strömungsprofil außerhalb des Übergangsbereiches 12, 12' liegt.

Für sehr hohe Fließgeschwindigkeiten ist das Strömungsprofil in beiden Teilabschnitten 11, 11' turbulent. Allerdings kommt es im zweiten Teilabschnitt 11' mit dem geringeren Querschnitt d₂ früher zu Kavitation, weshalb der erste Teilabschnitt 11 (d₁) gewählt wird.

Es versteht sich von selbst, dass dieses Blockdiagramm beliebig erweitert werden kann, wenn beispielsweise mehr als zwei Teilabschnitte 11, 11' verwendet werden, wenn mehr als ein Messelektrodenpaar 8, 8' in mindestens einem der Teilabschnitte 12, 12' vorgesehen ist, oder wenn die Übergangsbereiche 12, 12' in den verschiedenen Teilabschnitten 11, 11' nicht in unterschiedlichen Intervallen für die Fließgeschwindigkeit liegen, und entsprechend eine Mittelung vorgenommen werden muss.

### Bezugszeichen

- 1: magnetisch induktives Durchflussmessgerät gemäß Stand der Technik
- 2: strömendes Fluid
- 3: Messrohr
- 4: elektrisch isolierende Auskleidung, Liner
- 5: Gehäuseeinheit oder Gehäuse
- 6: Elektronikeinheit
- 7: Verbindungskabel
- 8, 8': Messelektrodenpaare in den Teilabschnitten 12, 12'
- 8a, 8a': weitere Messelektrodenpaare in den Teilabschnitten 12, 12'
- 9, 9': Magnetsystem mit zumindest zwei Spulen und je nach Ausführung auch Polschuhen, und zwar bei einteiliger Ausführung oder in einem Teilabschnitt bei mehrteiliger Ausführung
- 9a,9a': weiteres Magnetsystem bei mehrteiliger Ausführung
- 10: Magnetfeld senkrecht zur Strömungsrichtung des Fluides und zu den jeweiligen Verbindungsachsen der Messelektrodenpaare
- 11,11': erster Teilabschnitt (d₁), zweiter Teilabschnitt 2 (d₂)
- 12,12': erster Übergangsbereich, zweiter Übergangsbereich

## Patentansprüche

1. Vorrichtung (1) ausgeführt zur Messung des Durchflusses eines strömenden Fluides nach dem magnetisch-induktiven Messprinzip mit
(I) einem Messrohr (3) mit zumindest zwei in Strömungsrichtung des Fluids aufeinanderfolgenden Teilabschnitten (11,11'), wobei die Teilabschnitte (11,11') sich im Durchmesser und/oder der Geometrie der Querschnittsfläche unterscheiden, derart dass bei einer gegebener Durchflussrate unterschiedliche Fließgeschwindigkeiten des strömenden Fluides in den mindestens zwei Teilabschnitten vorherrschen,
(II) zumindest einem Magnetsystem (9,9') mit zumindest zwei Spulen zur Erzeugung eines Magnetfeldes (10) im Wesentlichen senkrecht zur Strömungsrichtung des Fluides,
(III) mindestens zwei Messelektrodenpaaren (8,8') zum Abgreifen der induzierten Spannung,
wobei zumindest ein Messelektrodenpaar (8) in einem ersten Teilabschnitt (11) und ein zweites Messelektrodenpaar (8') in einem zweiten Teilabschnitt (11') angeordnet ist,
wobei jedes Messelektrodenpaar (8,8') eine erste und eine zweite Messelektrode umfasst,
wobei die Messelektroden sich im oder am Messrohr gegenüber liegen und die jeweilige Verbindungslinie der Messelektroden senkrecht zur Rohrachse und senkrecht zum Magnetfeld (10) orientiert ist,
und
(IV) einer Elektronikeinheit (6) zur Signalerfassung, und/oder -auswertung und zur Speisung der Spulen,
wobei die Elektronikeinheit (6) so ausgestaltet ist,
dass sie für jeden Teilabschnitt (11,11') jeweils aus der induzierten Spannung die Fließgeschwindigkeit des Fluides und/oder die Durchflussrate bestimmt,
dass sie für jeden Teilabschnitt einen Übergangsbereich zwischen laminarer und turbulenter Strömung bestimmt,
dass sie für jeden Teilabschnitt prüft, ob der Übergangsbereich zwischen laminarer und turbulenter Strömung bei einer Messung vorliegt,
dass sie zur Bestimmung des Durchflusses einen Teilabschnitt (11,11') wählt, in welchem das vorherrschende Strömungsprofil im Wesentlichen außerhalb des jeweiligen Übergangsbereiches (12,12') zwischen laminarer und turbulenter Strömung liegt

2. Vorrichtung nach Anspruch 1,
wobei der Elektronikeinheit (6) eine Speichereinheit zugeordnet ist, auf welcher Speichereinheit experimentell ermittelte oder anhand von mathematischen Modellen errechnete fluidspezifische und/oder messrohrspezifische Parameter und/oder Kennlinien hinterlegt sind,
und dass die Elektronikeinheit (6) so ausgestaltet ist, dass sie anhand der Parameter und/oder Kennlinien für jeden Teilabschnitt (11,11') aus der Fließgeschwindigkeit des Fluides das gemäß einem angewendeten mathematischen Modell vorherrschende Strömungsprofil bestimmt.

3. Vorrichtung nach einem der vorhergehenden Ansprüche,
wobei ein Sensorelement zur Erfassung der elektrischen Leitfähigkeit des Fluides vorgesehen ist, und wobei die Elektronikeinheit (6) so ausgestaltet ist, dass für Fluide mit einer Zusammensetzung, bei der das Signalrauschen in dem für die Messung relevanten Durchflussbereich mit zunehmender Fließgeschwindigkeit stärker zunimmt als das Messsignal, insbesondere bei Fluiden mit einer geringen elektrischen Leitfähigkeit, zur Bestimmung des Durchflusses das Messelektrodenpaar (8,8') verwendet wird, welches in dem Teilabschnitt (11) mit dem größten Querschnitt angeordnet ist.

4. Vorrichtung nach einem der vorhergehenden Ansprüche,
wobei die einzelnen Messelektroden unterschiedliche Geometrien aufweisen, insbesondere eine spitze, stiftförmige, zylindrische, konische oder pilzkopfförmige Geometrie.

5. Vorrichtung nach einem der vorhergehenden Ansprüche,
wobei an mindestens einem Teilabschnitt (11,11') mindestens zwei Messelektrodenpaare (8,8a,8a',8a') angebracht sind.

6. Vorrichtung nach einem der vorhergehenden Ansprüche,
wobei das Magnetsystem (9,9') so konstruiert ist, dass es sich entlang aller Teilabschnitte (11, 11',...) erstreckt.

7. Vorrichtung nach einem Ansprüche 1-7,
wobei für jeden Teilabschnitt (11,11') ein separates Magnetsystem (9,9a,9',9a') vorgesehen ist.

8. Verfahren zur Messung eines strömenden Fluides nach dem magnetisch induktiven Messprinzip mit
(I) einem Messrohr (3), welches aus zumindest zwei in Strömungsrichtung des Fluids aufeinanderfolgenden Teilabschnitten (11,11') zusammengesetzt wird, wobei die Teilabschnitte (11,11') sich im Durchmesser und/oder der Geometrie der Querschnittsfläche unterscheiden, derart dass bei gegebener Durchflussrate unterschiedliche Fließgeschwindigkeiten des strömenden Fluides in den mindestens zwei Teilabschnitten vorherrschen,
(II) wobei ein Magnetfeld (10) im Wesentlichen senkrecht zur Strömungsrichtung des Fluides erzeugt wird, welches das Messrohr (3) durchsetzt,
(III) wobei die induzierte Spannung in jedem Teilabschnitt (11,11') abgegriffen wird,
und
(IV) wobei für jeden Teilabschnitt (11,11') jeweils aus der induzierten Spannung die Fließgeschwindigkeit des Fluides und/oder die Durchflussrate bestimmt wird,
wobei für jeden Teilabschnitt ein Übergangsbereich zwischen laminarer und turbulenter Strömung bestimmt wird,
wobei für jeden Teilabschnitt geprüft wird, ob der Übergangsbereich zwischen laminarer und turbulenter Strömung bei einer Messung vorliegt,
wobei zur Bestimmung des Durchflusses ein Teilabschnitt (11,11') gewählt wird, in welchem das vorherrschende Strömungsprofil im Wesentlichen außerhalb des jeweiligen Übergangsbereiches (12,12') zwischen laminarer und turbulenter Strömung liegt.

9. Verfahren nach Anspruch 8,
wobei anhand auf einer Speichereinheit hinterlegter experimentell ermittelter oder anhand von mathematischen Modellen errechneter fluidspezifischer und/oder messrohrspezifischer Parameter und/oder Kennlinien für jeden Teilabschnitt (11,11') aus der Fließgeschwindigkeit des Fluides das gemäß dem angewendeten mathematischen Modell vorherrschende Strömungsprofil bestimmt wird.

10. Verfahren nach einem der Ansprüche 8 oder 9,
wobei bei geringen Durchflussraten das Messelektrodenpaar (8') verwendet wird, welches im Teilabschnitt (11') mit dem kleinsten Querschnitt angeordnet ist.

11. Verfahren nach einem der Ansprüche 8 bis 10,
wobei bei hohen Durchflussraten das Messelektrodenpaar (8) verwendet wird, welches im Teilabschnitt (11) mit dem größten Querschnitt angeordnet ist.

12. Verfahren nach einem der Ansprüche 8 bis 11,
wobei für Fluide mit einer Zusammensetzung, bei der das Signalrauschen in dem für die Messung relevanten Durchflussbereich mit zunehmender Fließgeschwindigkeit stärker zunimmt als das Messsignal, insbesondere bei Fluiden mit einer geringen elektrischen Leitfähigkeit, zur Bestimmung des Durchflusses das Messelektrodenpaar (8,8') verwendet wird, welches in dem Teilabschnitt (11) mit dem größten Querschnitt angeordnet ist

## Claims

1. Apparatus (1) designed to measure the flow of a flowing fluid according to the electromagnetic measuring principle, with
(I) a measuring tube (3) with at least two consecutive subsections (11, 11') in the flow direction of the fluid, wherein the subsections (11, 11') differ from one another in terms of the diameter and/or geometry of the cross-sectional area in such a way that, at a given flow, different flow velocities of the flowing fluid prevail in the at least two subsections,
(II) at least a magnet system (9, 9') with at least two coils for the generation of a magnetic field (10) essentially perpendicular to the flow direction of the fluid,
(III) at least two pairs of measuring electrodes (8, 8') to measure the induced voltage,
wherein at least one pair of measuring electrodes (8) is arranged in a first subsection (11) and a second pair of measuring electrodes (8') is arranged in a second subsection (11'),
wherein each pair of measuring electrodes (8, 8') comprises a first and a second measuring electrode,
wherein the measuring electrodes are opposed to one another in or on the measuring tube and the connecting line of the measuring electrodes is oriented perpendicular to the tube axis et perpendicular to the magnetic field (10),
and
(IV) an electronic unit (6) designed for signal measurement and/or evaluation, and to feed the coils,
wherein said electronic unit (6) is designed in such a way that it determines, for each subsection (11, 11'), the flow velocity of the fluid and/or the flow rate from the induced voltage,
it determines, for each subsection (11, 11'), a transition zone between laminar and turbulent flow,
it checks, for each subsection, whether the transition zone between the laminar flow and the turbulent flow is present for a measurement,
it selects, for the purpose of determining the flow, a subsection (11, 11') in which the prevailing flow profile is essentially situated outside the transition zone (12, 12') between the laminar flow and the turbulent flow.

2. Apparatus as claimed in Claim 1,
wherein the electronic unit (6) is assigned a memory unit on which are saved fluid-specific and/or measuring tube-specific parameters and/or characteristic curves, which have been determined experimentally or using mathematical models, and wherein the electronic unit (6) is designed in such a way that - on the basis of the parameters and/or characteristic curves - it determines the prevailing flow profile for each subsection (11, 11') from the flow velocity of the fluid in accordance with an applied mathematical model.

3. Apparatus as claimed in one of the previous claims,
wherein a sensor element is provided to measure the electrical conductivity of the fluid,
and wherein the electronic unit (6) is designed in such a way that the measuring electrode pair (8, 8') that is arranged in the subsection (11) with the largest cross-section is used to determine the flow for fluids with a composition where the signal noise in the flow range that is relevant for the measurement increases more than the measuring signal with increasing flow velocity, particularly in the case of fluids with low electrical conductivity.

4. Apparatus as claimed in one of the previous claims,
wherein the individual measuring electrodes have different geometries, particularly a geometry that is pointed, pin-shaped, cylindrical, conical or in the shape of a mushroom head.

5. Apparatus as claimed in one of the previous claims,
wherein at least two pairs of measuring electrodes (8, 8a, 8', 8a') are arranged on at least one subsection (11, 11').

6. Apparatus as claimed in one of the previous claims,
wherein the magnet system (9, 9') is designed in such a way that it extends along all subsections (11, 11', ...).

7. Apparatus as claimed in one of the Claims 1 to 7,
wherein a separate magnet system (9, 9a, 9', 9a') is provided for each subsection (11, 11').

8. Procedure for measuring a flowing fluid according to the magnetic inductive measuring principle, with
(I) a measuring tube (3), which is composed of at least two consecutive subsections (11, 11') in the flow direction of the fluid, wherein the subsections (11, 11') differ in terms of the diameter and/or geometry of the cross-sectional area in such a way that, at a given flow rate, different flow velocities of the flowing fluid prevail in the at least two subsections,
(II) wherein a magnetic field (10) essentially perpendicular to the flow direction of the fluid is generated, wherein said field passes through the measuring tube (3),
(III) wherein the induced voltage is measured in each subsection (11, 11'), and
(IV) wherein the flow velocity of the fluid and/or the flow rate is determined from the induced voltage for each subsection (11, 11'),
wherein a transitional range between laminar flow and turbulent flow is determined for each subsection,
wherein, for each subsection, a check is carried out to verify whether the transition zone between the laminar flow and the turbulent flow is present for a measurement,
wherein, for the purpose of determining the flow, a subsection (11, 11') is selected in which the prevailing flow profile is essentially situated outside the transition zone (12, 12') between the laminar flow and the turbulent flow.

9. Procedure as claimed in Claim 8,
wherein the prevailing flow profile according to the mathematical model applied is determined for each subsection (11, 11') from the flow velocity of the fluid on the basis of fluid-specific and/or measuring tube-specific parameters and/or characteristic curves which are saved on a memory unit and determined experimentally or calculated using mathematical models.

10. Procedure as claimed in one of the Claims 8 or 9,
wherein the measuring electrode pair (8') which is arranged in the subsection (11') with the smallest cross-section is used at low flow rates.

11. Procedure as claimed in one of the Claims 8 to 10,
wherein the measuring electrode pair (8) which is arranged in the subsection (11') with the largest cross-section is used at high flow rates.

12. Procedure as claimed in one of the Claims 8 to 11,
wherein the measuring electrode pair (8, 8') that is arranged in the subsection (11) with the largest cross-section is used to determine the flow for fluids with a composition where the signal noise in the flow range relevant for the measurement increases more than the measuring signal with increasing flow velocity, particularly in the case of fluids with a low electrical conductivity.

## Revendications

1. Dispositif (1) exécuté en vue de la mesure du débit d'un fluide en écoulement d'après le principe de mesure magnéto-inductif, avec
(I) un tube de mesure (3) avec au moins deux sections partielles (11, 11') consécutives dans le sens d'écoulement du fluide, les sections partielles (11, 11') se distinguant en termes de diamètre et/ou de géométrie de la surface transversale, de telle sorte que pour un débit donné, différentes vitesses d'écoulement du fluide prédominent dans les aux moins deux sections partielles,
(II) au moins un système magnétique (9, 9') avec au moins deux bobines pour la génération d'un champ magnétique (10) pour l'essentiel perpendiculaire au sens d'écoulement du fluide,
(III) au moins deux paires d'électrodes de mesure (8, 8') destinées au prélèvement de la tension induite,
au moins une paire d'électrodes de mesure (8) étant disposée dans une première section partielle (11) et une deuxième paire d'électrode de mesure (8') dans une deuxième section partielle (11'),
chaque paire d'électrodes de mesure (8, 8') comprenant une première et une deuxième électrode de mesure,
les électrodes de mesure se faisant face dans ou sur le tube de mesure et la ligne de liaison respective des électrodes de mesure étant orientées verticalement à l'axe de tube et perpendiculairement au champ magnétique (10),
et
(IV) une unité électronique (6) destinée à la mesure et/ou à l'évaluation de signaux, ainsi qu'à l'alimentation des bobines,
l'unité électronique (6) étant conçue de telle sorte
à déterminer pour chaque section partielle (11, 11') à partir de la tension induite la vitesse d'écoulement du fluide et/ou le débit,
à déterminer pour chaque section partielle (11, 11') une zone de transition entre l'écoulement laminaire et l'écoulement turbulent,
à contrôler, pour chaque section partielle, si la zone de transition entre l'écoulement laminaire et l'écoulement turbulent est présente lors d'une mesure, à sélectionner, pour la détermination du débit, une section partielle (11, 11') dans laquelle le profil d'écoulement prédominant se situe pour l'essentiel en dehors de la zone de transition (12, 12') respective entre l'écoulement laminaire et l'écoulement turbulent.

2. Dispositif selon la revendication 1,
pour lequel est attribuée à l'unité électronique (6) une unité de mémoire dans laquelle sont enregistrés des paramètres et/ou des courbes caractéristiques spécifiques au fluide et/ou au tube de mesure, lesquels sont déterminés expérimentalement ou calculés à l'aide de modèles mathématiques,
et pour lequel l'unité électronique (6) est conçue de telle sorte à déterminer le profil d'écoulement prédominant selon un modèle mathématique appliqué à partir de la vitesse d'écoulement du fluide en utilisant les paramètres et/ou les courbes caractéristiques pour chaque sous-section (11, 11').

3. Dispositif selon l'une des revendications précédentes,
pour lequel un élément capteur est prévu pour mesurer la conductivité électrique du fluide,
et pour lequel l'unité électronique (6) est conçue de telle manière que pour les fluides ayant une composition pour laquelle le bruit de signal dans la gamme de débit pertinente pour la mesure augmente plus fortement avec la vitesse d'écoulement croissante que le signal de mesure, notamment dans le cas de fluides ayant une faible conductivité électrique, la paire d'électrodes de mesure (8, 8') disposée dans la section (11) avec la plus grande section transversale étant utilisée pour déterminer le débit.

4. Dispositif selon l'une des revendications précédentes,
pour lequel les différentes électrodes de mesure présentent des géométries différentes, notamment une géométrie pointue, en forme d'épingle, cylindrique, conique ou en forme de tête de champignon.

5. Dispositif selon l'une des revendications précédentes,
pour lequel au moins deux paires d'électrodes de mesure (8, 8a, 8', 8a') sont installées sur au moins une section partielle (11, 11').

6. Dispositif selon l'une des revendications précédentes,
pour lequel le système magnétique (9, 9') est construit de telle sorte à s'étendre le long de toutes les sections partielles (11, 11', ...).

7. Dispositif selon l'une des revendications 1 à 7,
pour lequel un système magnétique (9, 9a, 9', 9a') est prévu pour chaque section partielle (11, 11').

8. Procédé destiné à la mesure d'un fluide en écoulement selon le principe de mesure magnéto-inductif, avec
(I) un tube de mesure (3), lequel est composé d'au moins deux sections partielles (11, 11') dans le sens d'écoulement du fluide, les sections partielles (11, 11') se distinguant en termes de diamètre et/ou de géométrie de la surface transversale, de telle sorte que pour un débit donné, différentes vitesses d'écoulement du fluide prédominent dans les aux moins deux sections partielles,
(II) un champ magnétique (10) pour l'essentiel perpendiculaire au sens d'écoulement du fluide étant généré, lequel champ traverse le tube de mesure (3),
(III) la tension induite étant prélevée dans chaque section partielle (11, 11'), et
(IV) la vitesse d'écoulement du fluide et/ou le débit étant déterminés pour chaque section partielle (11, 11') à partir de la tension induite,
une zone partielle entre un écoulement laminaire et un écoulement turbulent étant déterminée pour chaque section partielle,
une vérification étant effectuée pour chaque section partielle, à savoir si la zone de transition entre l'écoulement laminaire et l'écoulement turbulent est présente lors d'une mesure,
une sélection d'une section partielle (11, 11') étant effectuée pour la détermination du débit, section dans laquelle le profil d'écoulement prédominant se situe pour l'essentiel en hors de la zone de transition (12, 12') respective entre l'écoulement laminaire et l'écoulement turbulent.

9. Procédé selon la revendication 8,
pour lequel le profil d'écoulement prédominant selon le modèle mathématique appliqué est déterminé à partir de la vitesse d'écoulement du fluide sur la base de paramètres et/ou de courbes caractéristiques spécifiques au fluide et/ou au tube de mesure pour chaque section (11, 11'), lesquels paramètres et/ou courbes sont déterminés ou calculés expérimentalement à l'aide de modèles mathématiques, stockés dans une unité de mémoire.

10. Procédé selon l'une des revendications 8 ou 9,
pour lequel on utilise, en présence de débits faibles, la paire d'électrodes de mesure (8') qui est disposée dans la section partielle (11') ayant la plus petite section transversale.

11. Procédé selon l'une des revendications 8 à 10,
pour lequel on utilise, en présence de débits faibles, la paire d'électrodes de mesure (8) qui est disposée dans la section partielle (11) ayant la plus grande section transversale.

12. Procédé selon l'une des revendications 8 à 11,
pour lequel, dans le cas de fluides ayant une composition dans laquelle le bruit de signal augmente, avec une vitesse d'écoulement croissante - dans la gamme de débit pertinente pour la mesure - plus fortement que le signal de mesure, notamment dans le cas de fluides ayant une conductivité électrique faible, on utilise, pour déterminer le débit, la paire d'électrodes de mesure (8, 8') qui est disposée dans la section partielle (11) ayant la plus grande section transversale.
